(19) **Europäisches Patentamt European Patent Office Office européen des brevets**

(11) **EP 4 610 846 A1**

(12) **EUROPEAN PATENT APPLICATION**
published in accordance with Art. 153(4) EPC

(43) Date of publication:
03.09.2025 Bulletin 2025/36

(21) Application number: 23912422.5

(22) Date of filing: 17.07.2023

(51) International Patent Classification (IPC):
*G06F 16/27* (2019.01)   *G06F 16/23* (2019.01)
*G06F 16/182* (2019.01)

(52) Cooperative Patent Classification (CPC):
G06F 16/182; G06F 16/23; G06F 16/27

(86) International application number:
PCT/KR2023/010177

(87) International publication number:
WO 2024/143735 (04.07.2024 Gazette 2024/27)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 27.12.2022 KR 20220185245
26.01.2023 KR 20230010215

(71) Applicant: **Samsung Electronics Co., Ltd.**
**Suwon-si, Gyeonggi-do 16677 (KR)**

(72) Inventor: **KIM, Seonil**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **SERVER SUPPORTING DISTRIBUTED DATABASE STRUCTURE AND OPERATION METHOD THEREOF**

(57) Provided is a server comprising: a communication circuit; a processor connected to the communication circuit; and a memory connected to the processor. The processor may be configured to: perform a collection operation of collecting, from an original storage and replica storages through the communication circuit, a timestamp value indicating a point in time at which data writing is completed; perform a determination operation of determining, from among the replica storages, a member to belong to a read pool together with the original storage by using the timestamp value in each storage, which has been collected through the collection operation; configure a read pool list so as to include the member determined through the determination operation and store the read pool list in the memory; receive a read request from a client apparatus through the communication circuit; select, from the read pool list, a storage to provide data in response to the read request; receive data through the communication circuit from the storage selected from the read pool list; and transmit the received data to the client apparatus through the communication circuit.

FIG. 2

EP 4 610 846 A1

## Description

[Technical Field]

Embodiments of the disclosure relate to a server supporting a distributed database structure, and an operation method thereof.

[Background Art]

A distributed database structure may include a primary node and a replica node. The primary node may record data in a storage of the primary node in response to a write request from a client, read data from a storage in response to a read request from the client, and provide the same to the client. The replica node may read data from a storage (e.g., replica storage) of the replica node in response to a read request from a client, and provide the same to the client. The primary node may perform an operation of providing data stored in its own storage (original storage) to replica nodes. For example, a process of recording, in the replica storages, data updated in the original storage through the write request from the client may be performed via data communication between the primary node and the replica nodes.

The above-described information may be provided as related art for the purpose of assisting the understand of the disclosure. No claim or determination is made as to whether any of the foregoing is applicable as prior art in relation to the disclosure.

[Disclosure of Invention]

[Technical Problem]

A distributed database structure may be classified into fully synchronous scheme and asynchronous schemes.

The fully synchronous scheme may provide strong or strict consistency to data. That is, a primary node and all replica nodes can maintain consistent data. A client may read the up to date data from the original storage of one of the replica storages.

The asynchronous scheme may provide eventual consistency. A speed at which the replica node responds to a read request from the client may be comparatively fast. However, according to a replica node which has responded, data provided to the client may not the up to date value.

According to various embodiments, in the asynchronous scheme, a server can relatively increase the reliability of data to be return to the client in response to a read request from the client. The technical problems of the disclosure are not limited to the above-described technical problems, and other unmentioned technical problems can be clearly understood from the description below by those skilled in the art to which the disclosure belongs.

[Solution to Problem]

According to an embodiment, a server may include a communication circuit, a processor connected to the communication circuit, and a memory connected to the processor. The memory may store instructions which, when executed, cause the processor to perform a collection operation of collecting, from an original storage and replica storages through the communication circuit, a timestamp value indicating a time point at which data writing is completed. The instructions may cause the processor to perform a determination operation of determining, from among the replica storages, a member to belong to a read pool, together with the original storage, by using the timestamp value in each of the storages, which has been collected through the collection operation. The instructions may cause the processor to configure a read pool list to include the member determined through the determination operation, and store the read pool list in the memory. The instructions may cause the processor to receive a read request from a client device through the communication circuit. The instructions may cause the processor to select, from the read pool list, a storage to provide data in response to the read request. The instructions may cause the processor to receive data from the storage selected from the read pool list through the communication circuit. The instructions may cause the processor to transmit the received data to the client device through the communication circuit.

The instructions may cause the processor to, in case that a first confidence time value remaining after subtracting a sum of a designated time unit value and a second timestamp value collected from a first replica storage from a sum of a first timestamp value collected from the original storage and an update period value indicating a period of the collection operation is equal to or smaller than a designated threshold time value, include the first replica storage in the read pool list.

The instructions may cause the processor to, in case that a second confidence time value remaining after subtracting a sum of the unit time value and a third timestamp value collected from a second replica storage from a sum of the first timestamp value and the update period value exceeds the threshold time value, exclude the second replica storage from the read pool list.

The instructions may cause the processor to, in case that a difference between a first timestamp value collected from the original storage and a second timestamp value collected from a first replica storage is equal to or smaller than a designated reference value, include the first replica storage in the read pool list.

The instructions may cause the processor to, in case that a difference between the first timestamp value and a third timestamp value collected from a second replica storage exceeds the reference value, exclude the second replica storage from the read pool list.

The instructions may cause the processor to, in case that a write request is received in the communication circuit, control the communication circuit to transmit the write request to the original storage.

According to an embodiment, a server may include a communication circuit, a processor connected to the communication circuit, and a memory connected to the processor and including an original storage. The memory may store instructions which, when executed, cause the processor to receive a write request from a client device through the communication circuit. The memory may store instructions which, when executed, cause the processor to record data corresponding to the write request in the original storage. The instructions may cause the processor to update a timestamp value used to configure a read pool, which can provide data in response to a read request from the client device, with a timestamp value indicating a time point at which the recording is completed. The instructions may cause the processor to transmit the updated timestamp value to replica storages through the communication circuit.

The instructions may cause the processor to record a timestamp value in a log file indicating use details of the original storage.

The instructions may cause the processor to, in case that a read request is received in the communication circuit, control the communication circuit to transmit the read request to a server which manages the read pool.

According to an embodiment, a method of operating a server is provided. The method may include collecting, from an original storage and replica storages through a communication circuit of the server, a timestamp value indicating a time point at which data writing is completed. The method may include determining, from among the replica storages, a member to belong to a read pool, together with the original storage, by using the timestamp value in each of the storages, which has been collected through the collection. The method may include configuring a read pool list to include the member determined through the determination operation, and storing the read pool list in a memory of the server. The method may include receiving a read request from a client device through the communication circuit. The method may include selecting, from the read pool list, a storage to provide data in response to the read request. The method may include receiving data from the storage selected from the read pool list through the communication circuit. The method may include transmitting the received data to the client device through the communication circuit.

The configuring of the read pool list may include, in case that a first confidence time value remaining after subtracting a sum of a designated time unit value and a second timestamp value collected from a first replica storage from a sum of a first timestamp value collected from the original storage and an update period value indicating a period of the collection is equal to or smaller than a designated threshold time value, including the first replica storage in the read pool list.

The configuring of the read pool list may include, in case that a second confidence time value remaining after subtracting a sum of the unit time value and a third timestamp value collected from a second replica storage from a sum of the first timestamp value and the update period value exceeds the threshold time value, excluding the second replica storage from the read pool list.

The configuring of the read pool list may include, in case that a difference between a first timestamp value collected from the original storage and a second timestamp value collected from a first replica storage is equal to or smaller than a designated reference value, including the first replica storage in the read pool list.

The configuring of the read pool list may include, in case that a difference between the first timestamp value and a third timestamp value collected from a second replica storage exceeds the reference value, excluding the second replica storage from the read pool list.

According to an embodiment, a method of operating a server is provided. The method may include receiving a write request from a client device through a communication circuit of the server. The method may include recording data corresponding to the write request in an original storage of the server. The method may include updating a timestamp value used to configure a read pool, which can provide data in response to a read request from the client device, with a timestamp value indicating a time point at which the recording is completed. The method may include transmitting the updated timestamp value to replica storages through the communication circuit.

[Advantageous Effects of Invention]

A server according to various embodiments can provide a client device with a faster response and reliable data to a read request by distributing a load to the read request to replica storages. In addition, various effects directly or indirectly identified through the disclosure can be provided.

[Brief Description of Drawings]

FIG. 1 is a block diagram illustrating an electronic device in a network environment according to various embodiments.
FIG. 2 illustrates a configuration of a distributed database system according to an embodiment.
FIG. 3 illustrates an operation performed by a data management server in response to a write request from a client device according to an embodiment.
FIG. 4 illustrates an operation performed by a proxy server in response to a read request from a client device according to an embodiment.
FIG. 5 is a flowchart illustrating operations of a second processor in a proxy server according to an embodiment.
FIG. 6 is a flowchart illustrating operations of a first processor in a data management server according to an embodiment.

[Mode for the Invention]

Embodiments of the disclosure are described in detail with reference to the accompanying drawings as to be easily practiced by those skilled in the art to which the disclosure belongs. However, the disclosure may be implemented in other various forms and is not limited to the embodiments herein. In relation to the description of the drawings, the same or similar reference signs may be used to refer to the same or similar elements. In addition, for clarity and conciseness, no description is made of well-known functions and configurations in the drawings and relevant descriptions.

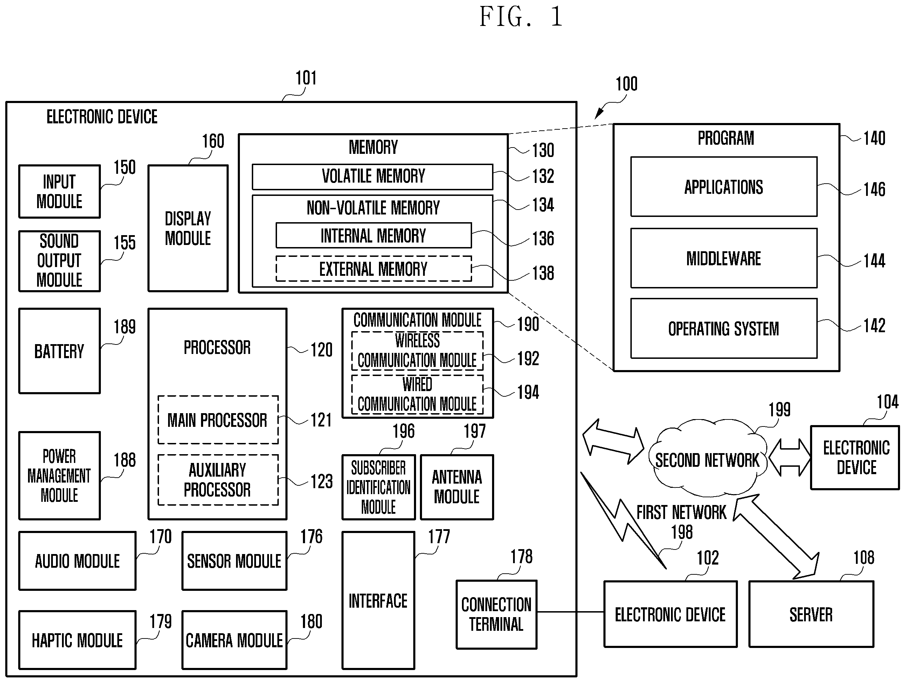

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) commu-

EP 4 610 846 A1

nication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile

6

edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

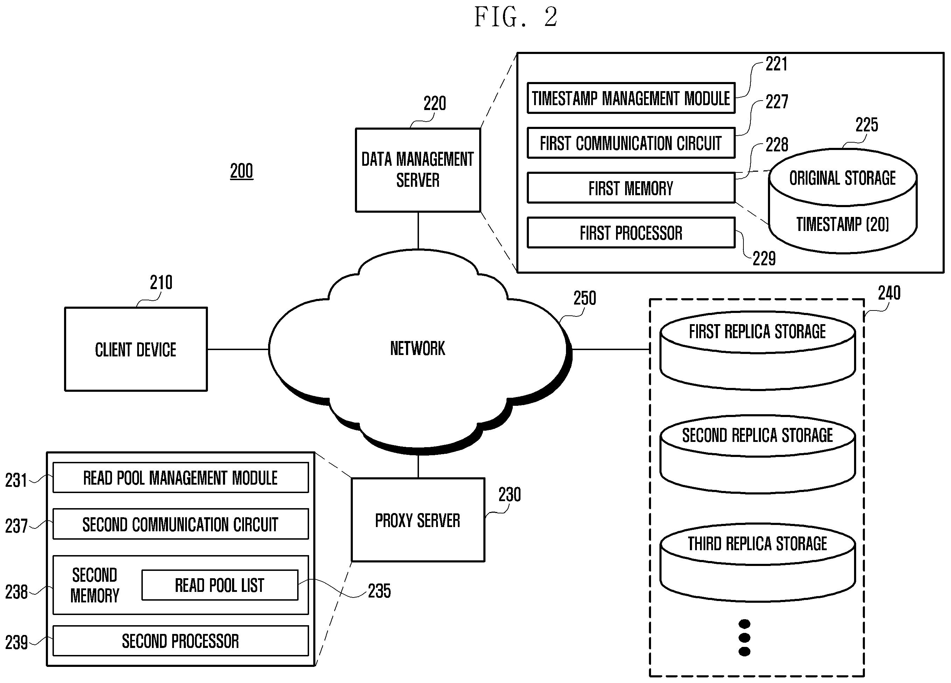

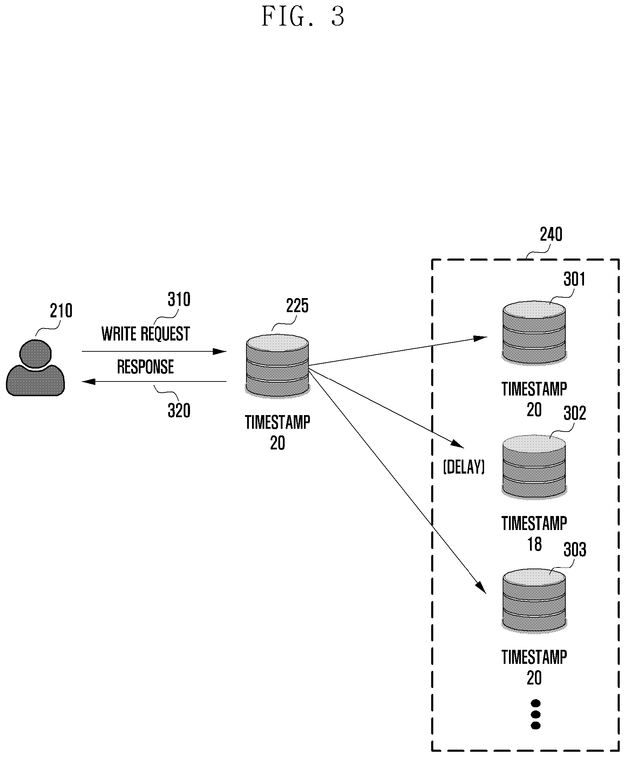

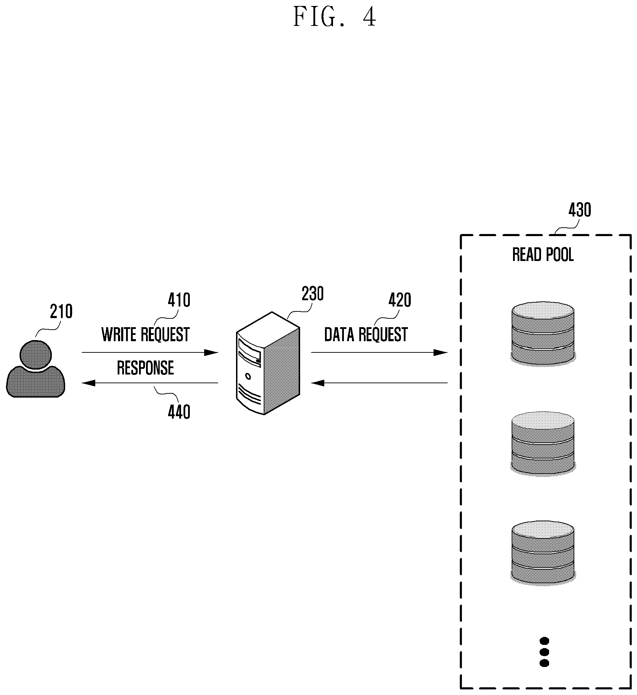

FIG. 2 illustrates a configuration of a distributed database system 200 according to an embodiment. FIG. 3 illustrates an operation performed by a data management server 220 in response to a write request from a client device 210 according to an embodiment. FIG. 4 illustrates an operation performed by a proxy server 230 in response to a read request from a client device 210 according to an embodiment.

Referring to FIG. 2, a system 200 may include a client device 210, a data management server (e.g., primary node) 220, a proxy server (e.g., proxy node) 230, and replica storages (e.g., replica nodes) 240.

A network 250 (e.g., the second network 199 of FIG. 1) may include a network and/or a cellular network for remote communication such as Internet or a computer network (e.g., LAN or WAN). The connection among the above-described devices 210, 220, 230, and 240 in the system 200 may be established through the network 250.

The client device 210 (e.g., the electronic device 101 of FIG. 1) may perform data communication with the servers 220 and 230 through the network 250. For example, referring to FIGS. 3 and 4, the client device 210 may transmit a message (hereinafter, referred to as a write request) 310 requesting data writing or a message (hereinafter, referred to as a read request) 410 requesting data reading to the data management server 220 or the proxy server 230 through the network 250.

According to an embodiment, the data management server 220 may include a timestamp management module 221, a first communication circuit 227, a first memory 228, and a first processor 229. The first communication circuit 227, the memory 228, and the first processor 229 may have substantially the same implementation as and perform the same function as the communication module 190, the memory 130, and the processor 120 of FIG. 1, respectively.

When the read request is received in the first communication 227, the first processor 229 may control the first communication circuit 227 to transfer the read request to the proxy server 230.

The first processor 229 may receive the write request from the client device 210 through the first communication circuit 227. The first processor 229 may perform transaction in response to the write request from the client device 210. For example, the first processor 229 may update data stored in an original storage 225 of the first memory 228 with new data corresponding to the write request. Referring to FIG. 3, the first processor 229 may transmit a response message (e.g., an update complete message) 320 indicating whether the transaction has been successfully performed to the client device 210 through the first communication circuit 227.

The first processor 229 may generate identification information (e.g., global transaction identification (GTID)) for identifying the performed transaction in response to the write request, and record the same in a log file (e.g., binary log) in which use details of the original storage 225 are recorded. The first processor 229 may identify data corresponding to the identification information in the original storage 225, replicate the identified data, and transmit a replica to the replica storages 240. Accordingly, the replica storages 240 may be synchronized with the original storage 225.

According to an embodiment, the timestamp management module 221 may record a timestamp indicating a time point at which the transaction is completed (e.g., a time point at which updating is completed) in a log file of the original storage 225 together with the corresponding identification information. For example, the timestamp management module 221 may update the timestamp value recorded in the log file with a timestamp value indicating a time point at which the most recent transaction is completed. The timestamp management module 221 may transmit the replica to the replica storages 240 together with the updated timestamp value. Accordingly, a newly updated timestamp value may be recorded in a log file of each of the replica storages 240. The timestamp management module 221 may include instructions which may be stored in the first memory 228 and executed by the first processor 229.

Referring to FIG. 3, the timestamps recorded in the original storage 225, a first replica storage 301, and a third replica storage 303 may be all "20" and identical to one another. When the timestamps are identical, it may mean that the first replica storage 301 and the third replica storage 303 are synchronized with the original storage 225, and accordingly, the replica stored in the first replica storage 301 and the replica stored in the third replica storage 303 are reliable. Upon the delay in the transmission to the second replica storage 302, the timestamp recorded in the second replica storage 302 may have a value of "18", which is smaller than the value of the timestamp recorded in the original storage 225. When the second replica storage 302 has the timestamp having the value smaller than the timestamp of the original storage 225, it may mean that there is high possibility that the second replica storage 302 has not been synchronized with the original storage 225.

According to an embodiment, the proxy server 230 may include a read pool management module 231, a second communication circuit 237, a second memory 238, and a second processor 239. The second communication circuit 237, the second memory 238, and the second processor 239 may have substantially the same implementation as and perform the same function as the communication module 190, the memory 130, and the processor 120 of FIG. 1, respectively.

According to an embodiment, the read pool management module 231 may identify the original storage 225 and the replica storages 240 at each determine period Δt so as to collect timestamp values of the respective storages. The read pool management module 231 may use the collected timestamp values to select, from among the replica storages 240, a member to belong to a read pool (in other words, a reliable storage group) which can provide data to the client device 210. The original storage 225 may provide a source of the replica, and thus the read pool management module 231 may determine the original storage 225 as a member of the read pool which can provide data to the client device 210.

According to an embodiment, the read pool management module 231 may determine, based on a difference between the timestamp value collected from the original storage 225 and the timestamp value collected from the replica storage, whether the replica storage can be a member of the read pool. For example, when the difference has a value equal to or smaller than a designated reference value, the read pool management module 231 may determine the replica storage as a member of the read pool. When the difference exceeds the reference value, the read pool management module 231 may exclude the replica storage from the read pool.

According to an embodiment, the read pool management module 231 may use the timestamp value collected from the original storage 225 and the timestamp value collected from the replica storage, so as to calculate a confidence time value, and may determine, based on the calculated confidence time value, whether the replica storage can be a member of the read pool. For the calculation of the confidence time value, for example, the following Equation 1 can be used. When the confidence time value calculated using Equation 1 is equal to or smaller than a designated threshold time value, the read pool management module 231 may determine the replica storage as a member of the read pool. When the calculated confidence time value exceeds the threshold time value, the read pool management module 231 may exclude the replica storage from the read pool.

[Equation 1] (Timestamp value of original storage 225 + update period value (Δt)) - (unit time value + timestamp value of replica storage)  [Equation 1]

Equation 1 above is merely provided as an example to assist understanding, and the disclosure is not limited thereto, and alternation, application, or extension can be made in various schemes.

An example of a method for updating a read pool list 235 by using Equation 1 is described with reference to Table 1, Tabe 2, and Table 3. For example, the updating process is described by configuring the threshold time value as 5 seconds, configuring the update period value Δt as 3 seconds, and configuring the unit time value as 1 second.

[Table 1]

| Time | Primary timestamp | Replica 1 timestamp | Replica 2 timestamp | Replica 3 timestamp | Replica 4 timestamp | Read pool |
|---|---|---|---|---|---|---|
| 0 | 0 | 0 | 0 | 0 | 0 | Primary |

The initial timestamp values of all storages (Primary, Replica 1, Replica 2, Replica 3, and Replica 4) may be all "0" as shown in Table 1, and the read pool may include an original (primary) storage only.

[Table 2]

| Time | Primary timestamp | Replica 1 timestamp | Replica 2 timestamp | Replica 3 timestamp | Replica 4 timestamp | Read pool |
|---|---|---|---|---|---|---|
| 0 | 0 | 0 | 0 | 0 | 0 | Primary |
| 0+Δt | 3 | 3 | 1 | 1 | 0 | Primary Replica 1 Replica 2 Replica 3 Replica 4 |
| 0+Δt*2 | 6 | 5 | 3 | 1 | 0 | Primary Replica 1 Replica 2 |

Table 2 above indicates the updating has been performed two times. When the timestamp value is first updated (e.g., when time is 0+Δt), transmission delay may occur in Replica 2, 3, and 4 among the replica storages. During primary updating, Replica 1, 2, 3, and 4 may all satisfy a condition to belong to the read pool as shown in the calculation result below.

$$Replica\ 1: (3+3) - (1+3) = 2 <= 5$$

$$Replica\ 2: (3+3) - (1+1) = 4 <= 5$$

$$Replica\ 3: (3+3) - (1+1) = 4 <= 5$$

$$Replica\ 4: (3+3) - (1+0) = 5 <= 5$$

During secondary updating, Replica 3 and 4 may fail to satisfy the condition and may be excluded from the read pool.

$$Replica\ 1: (6+3) - (1+5) = 3 <= 5$$

$$Replica\ 2: (6+3) - (1+3) = 5 <= 5$$

$$Replica\ 3: (6+3) - (1+1) = 7 > 5$$

$$Replica\ 4: (6+3) - (1+0) = 8 > 5$$

During the secondary updating, there is a 5-second difference between the timestamp of Replica 2 and the timestamp of the primary storage, this difference is identical to a threshold time value, and thus is can be considered that Replica 3 belongs to the read pool. However, in consideration of a 3-second update period, it can be more appropriate to exclude Replica 3 from the read pool. For example, when the timestamp of Replica 3 is not updated at the next period, a difference between the timestamp value of Replica 3 and the timestamp value of the original (primary) timestamp may exceed a threshold time value before the next period arrives. The following Table 3 can be referred to.

[Table 3]

| Time | Primary timestamp | Replica 1 timestamp | Replica 2 timestamp | Replica 3 timestamp | Replica 4 timestamp | Read pool |
|---|---|---|---|---|---|---|
| 0 | 0 | 0 | 0 | 0 | 0 | Primary |
| $0+\Delta t$ | 3 | 3 | 1 | 1 | 0 | Primary Replica 1 Replica 2 Replica 3 |
| $0+\Delta t*2$ | 6 | 5 | 3 | 1 | 0 | Primary |

(continued)

| Time | Primary timestamp | Replica 1 timestamp | Replica 2 timestamp | Replica 3 timestamp | Replica 4 timestamp | Read pool |
|---|---|---|---|---|---|---|
| 0+Δt*2+1 | 7 | 5 | 5 | 1 | 0 | Replica 1 Replica 2 |

According to an embodiment, the timestamp management module 221 may generate, regardless of whether a transaction occurs, a dummy request at each unit time (1 second) so as to update a timestamp value of the original (primary) storage. For example, referring to Table 2, when 1 second (unit time) passes after the secondary updating, the timestamp value of the original (primary) storage is updated from 6 seconds to 7 seconds, and the timestamp value of Replica 3 may not be updated. Accordingly, a difference between the timestamp value of Replica 3 and the timestamp value of the original (primary) timestamp becomes 6 seconds. This difference exceeds the threshold time value, which corresponds to a case where Replica 3 needs to be excluded form the read pool. Accordingly, it can be appropriate to include the update period value Δt to the equation used to update the read pool.

The read pool management module 231 may store the read pool list 235 in the second memory 238 and update the read pool list 235 at each designated period Δt.

The read pool management module 231 may include instructions which may be stored in the second memory 238 and executed by the second processor 239.

When a write request is received in the second communication circuit 237, the second processor 229 may control the second communication circuit 237 to transmit the write request to the data management server 220.

The second processor 239 may receive a read request from the client device 210 through the second communication circuit 237. The second processor 239 may identify the read pool list 235 in response to the read request, and may select, from the read pool list 235, a storage to provide data to the client device 210. Referring to FIG. 4, the second processor 239 may transmit, from the read pool 430 to the selected storage through the second communication circuit 237, a message 420 requesting to provide data. The second processor 239 may receive data from the selected storage and transmit the received data to the client device 210 as a response 440 to the read request 410.

The terms "first" and "second," as used above and as will be used hereinafter, are merely used for distinguishing between names, and no special meaning such as importance or order is assigned thereto.

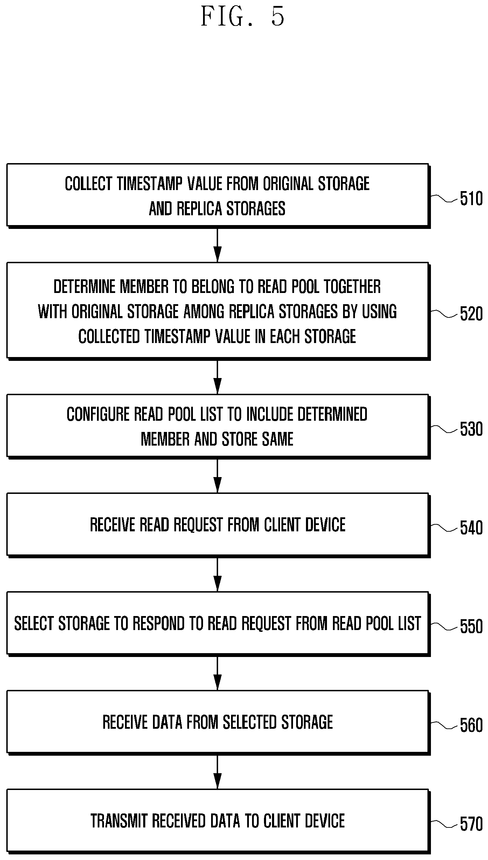

FIG. 5 is a flowchart illustrating operations of a second processor 239 in a proxy server 230 according to an embodiment.

In an embodiment below, respective operations may be subsequently performed, but are not necessarily performed subsequently. For example, the sequence of the respective operations may be changed, and two or more operations may be performed in parallel.

According to an embodiment, operations 510 to 570 may be understood to be performed by a processor (e.g., the second processor 239 of FIG. 2) of a proxy server (e.g., the proxy server 230 of FIG. 2).

In operation 510, the second processor 239 may collect a timestamp value at each designated period Δt from an original storage 225 and replica storages 240 through a second communication circuit 237.

In operation 520, the second processor 239 may determine a member to belong to a read pool together with the original storage 225 among the replica storages 240 by using the collected timestamp value of each storage. In operation 530, the second processor 239 may configure a read pool list 235 to include the determined member and store the same in a second memory 238.

According to an embodiment of operation 530, when a first confidence time value remaining after subtracting a sum of a unit time value (e.g., 1 second) and a second timestamp value collected from a first replica storage from a sum of a first timestamp value collected from the original storage 225 and an update period value (e.g., 3 seconds) is equal to smaller than a threshold time value (e.g., 5 seconds), the second processor 239 may include the first replica storage in the read pool list 235. When a second confidence time value remaining after subtracting a sum of the unit time value and a third timestamp value collected from a second replica storage from a sum of the first timestamp value and the update period value exceeds a threshold time value, the second processor 239 may exclude the second replica storage from the read pool list 235.

According to an embodiment of operation 530, when a difference between the first timestamp value and the second timestamp value has a value equal to or smaller than a designated reference value, the second processor 239 may include the first replica storage in the read pool list 235. When a difference between the first timestamp value and a third timestamp value has a value exceeding a reference value, the second processor 239 may exclude the second replica storage from the read pool list 235.

In operation 540, the second processor 239 may receive a read request from a client device 210 through the second communication circuit 237. In operation 550, the second processor 239 may select a storge to provide data from the read pool list 235 in response to the read request. The selection scheme varies, and for example, the storage can be randomly selected from the read pool.

In operation 560, the second processor 239 may receive data from the selected storage through the second communication circuit 237.

In operation 570, the second processor 239 may transmit data received from the selected storage to the client device 210 through the second communication circuit 237.

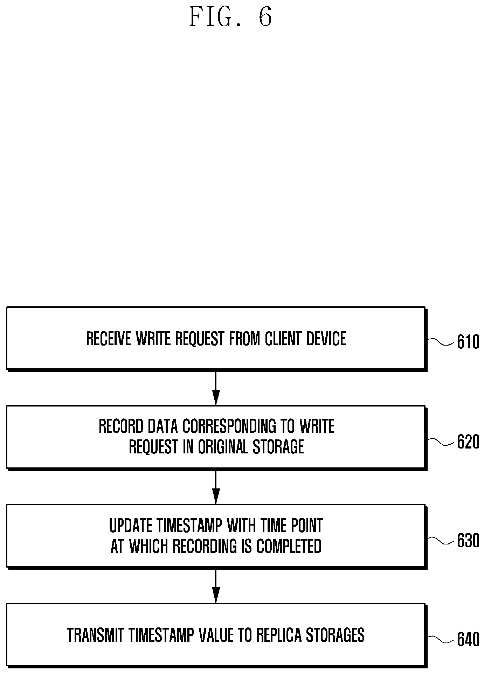

FIG. 6 is a flowchart illustrating operations of a first processor 229 in a data management server 220 according to an embodiment.

In an embodiment below, respective operations may be subsequently performed, but are not necessarily performed subsequently. For example, the sequence of the respective operations may be changed, and two or more operations may be performed in parallel.

According to an embodiment, operations 610 to 640 may be understood to be performed by a processor (e.g., the first processor 229 of FIG. 2) of a data management server (e.g., the data management server 220 of FIG. 2).

In operation 610, the first processor 229 may receive a write request from a client device 210 through a first communication circuit 227.

In operation 620, the first processor 229 may record data corresponding to the write request in an original storage 225 (e.g., update existing data with new data corresponding to the write request).

In operation 630, the first processor 229 may update a timestamp value stored in the original storage 225 with a timestamp value indicating a time point at which the recording is completed.

In operation 640, the first processor 229 may transmit the updated timestamp value to the replica storages 240 through the first communication circuit 227.

According to an embodiment, a server (e.g., the proxy server 230) may include a communication circuit, a processor connected to the communication circuit, and a memory connected to the processor. The memory may store instructions which, when executed, cause the processor to perform a collection operation of collecting, from an original storage and replica storages through the communication circuit, a timestamp value indicating a time point at which data writing is completed. The instructions may cause the processor to perform a determination operation of determining, from among the replica storages, a member to belong to a read pool together with the original storage by using the timestamp value in each storage, which has been collected through the collection operation. The instructions may cause the processor to configure a read pool list so that the member determined through the determination operation is included and store the read pool list in the memory. The instructions may cause the processor to receive a read request from a client device through the communication circuit. The instructions may cause the processor to select, from the read pool list, a storage to provide data in response to the read request. The instructions may cause the processor to receive data from the storage selected from the read pool list through the communication circuit. The instructions may cause the processor to transmit the received data to the client device through the communication circuit.

The instructions may cause the processor to, in case that a first confidence time value remaining after subtracting a sum of a designated time unit value and a second timestamp value collected from a first replica storage from a sum of a first timestamp value collected from the original storage and an update period value indicating a period of the collection operation is equal to or smaller than a designated threshold time value, cause the first replica storage to be included in the read pool list.

The instructions may cause the processor to, in case that a second confidence time value remaining after subtracting a sum of the unit time value and a third timestamp value collected from a second replica storage from a sum of the first timestamp value and the update period value exceeds the threshold time value, exclude the second replica storage from the read pool list.

The instructions may cause the processor to, in case that a difference between a first timestamp value collected from the original storage and a second timestamp value collected from a first replica storage has a value equal to or smaller than a reference value, cause the first replica storage to be included in the read pool list.

The instructions may cause the processor to, in case that a difference between the first timestamp value and a third timestamp value collected from a second replica storage exceeds the reference value, exclude the second replica storage from the read pool list.

The instructions may cause the processor to, in case that a write request is received in the communication circuit, control the communication circuit to transmit the write request to the original storage.

According to an embodiment, a server (e.g., the data management server 220) may include a communication circuit, a processor connected to the communication circuit, and a memory connected to the processor and including an original storage. The memory may store instructions which, when executed, cause the processor to receive a write request from a client device through the communication circuit. The memory may store instructions which, when executed, cause the processor to record data corresponding to the write request in the original storage. The instructions may cause the processor to update a timestamp value used to configure a read pool which can provide data in response to a read request from the client device with a timestamp value indicating a time point at which the recording is completed. The instructions may cause the processor to transmit the updated timestamp value to replica storages through the communication circuit.

The instructions may cause the processor to record a timestamp value in a log file indicating use details of the original storage.

The instructions may cause the processor to, in case that a read request is received in the communication circuit, control the communication circuit to transmit the read request to a server which manages the read pool.

According to an embodiment, a method of operating a server (e.g., the proxy server 230) is provided. The method may include collecting, from an original storage and replica storages through a communication circuit of the server, a timestamp value indicating a time point at which data writing is completed (e.g., operation 510). The method may include determining, from among the replica storages, a member to belong to a read pool together with the original storage by using the timestamp value in each storage, which has been collected through the collection (e.g., operation 520). The method may include configuring a read pool list so that the member determined through the determination operation is included and storing the read pool list in a memory of the server (e.g., operation 530). The method may include receiving a read request from a client device through the communication circuit (e.g., operation 540). The method may include selecting, from the read pool list, a storage to provide data in response to the read request (e.g., operation 550). The method may include receiving data from the storage selected from the read pool list through the communication circuit (e.g., operation 560). The method may include transmitting the received data to the client device through the communication circuit (e.g., operation 570).

The configuring of the read pool list may include, in case that a first confidence time value remaining after subtracting a sum of a designated time unit value and a second timestamp value collected from a first replica storage from a sum of a first timestamp value collected from the original storage and an update period value indicating a period of the collection is equal to or smaller than a designated threshold time value, causing the first replica storage to be included in the read pool list.

The configuring of the read pool list may include, in case that a second confidence time value remaining after subtracting a sum of the unit time value and a third timestamp value collected from a second replica storage from a sum of the first timestamp value and the update period value exceeds the threshold time value, excluding the second replica storage from the read pool list.

The configuring of the read pool list may include, in case that a difference between a first timestamp value collected from the original storage and a second timestamp value collected from a first replica storage has a value equal to or smaller than a reference value, causing the first replica storage to be included in the read pool list.

The configuring of the read pool list may include, in case that a difference between the first timestamp value and a third timestamp value collected from a second replica storage exceeds the reference value, excluding the second replica storage from the read pool list.

According to an embodiment, a method of operating a server (e.g., the data management server 220) is provided. The method may include receiving a write request from a client device through a communication circuit of the server (e.g., operation 610). The method may include recording data corresponding to the write request in an original storage of the server (e.g., operation 620). The method may include updating a timestamp value used to configure a read pool which can provide data in response to a read request from the client device with a timestamp value indicating a time point at which the recording is completed (e.g., operation 630). The method may include transmitting the updated timestamp value to replica storages through the communication circuit (e.g., operation 640).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A server comprising:

    a communication circuit;
    a processor connected to the communication circuit; and
    a memory connected to the processor,
    wherein the memory is configured to store instructions which, when executed, cause the processor to:

    perform a collection operation of collecting, from an original storage and replica storages through the communication circuit, a timestamp value indicating a time point at which data writing is completed;
    perform a determination operation of determining, from among the replica storages, a member to belong to a read pool, together with the original storage, by using the timestamp value in each of the storages, which has been collected through the collection operation;
    configure a read pool list to include the member determined through the determination operation, and store the read pool list in the memory;
    receive a read request from a client device through the communication circuit;
    select, from the read pool list, a storage to provide data in response to the read request;
    receive data from the storage selected from the read pool list through the communication circuit; and
    transmit the received data to the client device through the communication circuit.

2. The server of claim 1, wherein the instructions cause the processor to, in case that a first confidence time value remaining after subtracting a sum of a designated time unit value and a second timestamp value collected from a first replica storage from a sum of a first timestamp value collected from the original storage and an update period value indicating a period of the collection operation is equal to or smaller than a designated threshold time value, include the first replica storage in the read pool list.

3. The server of claim 2, wherein the instructions cause the processor to, in case that a second confidence time value remaining after subtracting a sum of the unit time value and a third timestamp value collected from a second replica storage from the sum of the first timestamp value and the update period value exceeds the threshold time value, exclude the second replica storage from the read pool list.

4. The server of claim 1, wherein the instructions cause the processor to, in case that a difference between a first timestamp value collected from the original storage and a second timestamp value collected from a first replica storage is equal to or smaller than a designated reference value, include the first replica storage in the read pool list.

5. The server of claim 4, wherein the instructions cause the processor to, in case that a difference between the first timestamp value and a third timestamp value collected from a second replica storage exceeds the reference value, exclude the second replica storage from the read pool list.

6. The server of one of claims 1 to 5, the instructions cause the processor to, in case that a write request is received via the communication circuit, control the communication circuit to transmit the write request to the original storage.

7. A server comprising:

a communication circuit;
a processor connected to the communication circuit; and
a memory connected to the processor and comprising an original storage,
wherein the memory is configured to store instructions which, when executed, to cause the processor:

receive a write request from a client device through the communication circuit;
record data corresponding to the write request in the original storage;
update a timestamp value used to configure a read pool, which can provide data in response to a read request from the client device, with a timestamp value indicating a time point at which the recording is completed; and
transmit the updated timestamp value to replica storages through the communication circuit.

8. The server of claim 7, wherein the instructions cause the processor to record a timestamp value in a log file indicating use details of the original storage.

9. The server of claim 7 or 8, wherein the instructions cause the processor to, in case that a read request is received via the communication circuit, control the communication circuit to transmit the read request to a server which manages the read pool.

10. A method of operating a server, the method comprising:

collecting, from an original storage and replica storages through a communication circuit of the server, a timestamp value indicating a time point at which data writing is completed;
determining, from among the replica storages, a member to belong to a read pool, together with the original storage, by using the timestamp value in each of the storages, which has been collected through the collection;
configuring a read pool list to include the member determined through the determination, and storing the read pool list in a memory of the server;
receiving a read request from a client device through the communication circuit;
selecting, from the read pool list, a storage to provide data in response to the read request;
receiving data from the storage selected from the read pool list through the communication circuit; and
transmitting the received data to the client device through the communication circuit.

11. The method of claim 10, wherein the configuring of the read pool list comprises, in case that a first confidence time value remaining after subtracting a sum of a designated time unit value and a second timestamp value collected from a first replica storage from a sum of a first timestamp value collected from the original storage and an update period value indicating a period of the collection is equal to or smaller than a designated threshold time value, including the first replica storage in the read pool list.

12. The method of claim 11, wherein the configuring of the read pool list comprises, in case that a second confidence time value remaining after subtracting a sum of the unit time value and a third timestamp value collected from a second replica storage from the sum of the first timestamp value and the update period value exceeds the threshold time value, excluding the second replica storage from the read pool list.

13. The method of one of claims 10 to 12, wherein the configuring of the read pool list comprises, in case that a difference between the first timestamp value collected from the original storage and the second timestamp value collected from the first replica storage is equal to or smaller than a designated reference value, including the first replica storage in the read pool list.

14. The method of claim 13, wherein the configuring of the read pool list comprises, in case that a difference between the first timestamp value and the third timestamp value collected from the second replica storage exceeds the reference value, excluding the second replica storage from the read pool list.

15. A method of operating a server, the method comprising:

receiving a write request from a client device through a communication circuit of the server;
recording data corresponding to the write request in an original storage of the server;
updating a timestamp value used to configure a read pool, which can provide data in response to a read request from the client device, with a timestamp value indicating a time point at which the recording is completed; and
transmitting the updated timestamp value to replica storages through the communication circuit.

# FIG. 1

ELECTRONIC DEVICE 101

100

PROGRAM 140

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

APPLICATIONS 146

MIDDLEWARE 144

OPERATING SYSTEM 142

BATTERY 189

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

POWER MANAGEMENT MODULE 188

SUBSCRIBER IDENTIFICATION MODULE 196

ANTENNA MODULE 197

AUDIO MODULE 170

SENSOR MODULE 176

INTERFACE 177

HAPTIC MODULE 179

CAMERA MODULE 180

CONNECTION TERMINAL 178

SECOND NETWORK 199

ELECTRONIC DEVICE 104

FIRST NETWORK 198

ELECTRONIC DEVICE 102

SERVER 108

EP 4 610 846 A1

FIG. 2

EP 4 610 846 A1

FIG. 3

FIG. 4

# FIG. 5

COLLECT TIMESTAMP VALUE FROM ORIGINAL STORAGE AND REPLICA STORAGES ～510

DETERMINE MEMBER TO BELONG TO READ POOL TOGETHER WITH ORIGINAL STORAGE AMONG REPLICA STORAGES BY USING COLLECTED TIMESTAMP VALUE IN EACH STORAGE ～520

CONFIGURE READ POOL LIST TO INCLUDE DETERMINED MEMBER AND STORE SAME ～530

RECEIVE READ REQUEST FROM CLIENT DEVICE ～540

SELECT STORAGE TO RESPOND TO READ REQUEST FROM READ POOL LIST ～550

RECEIVE DATA FROM SELECTED STORAGE ～560

TRANSMIT RECEIVED DATA TO CLIENT DEVICE ～570

# FIG. 6

RECEIVE WRITE REQUEST FROM CLIENT DEVICE — 610

RECORD DATA CORRESPONDING TO WRITE REQUEST IN ORIGINAL STORAGE — 620

UPDATE TIMESTAMP WITH TIME POINT AT WHICH RECORDING IS COMPLETED — 630

TRANSMIT TIMESTAMP VALUE TO REPLICA STORAGES — 640

## INTERNATIONAL SEARCH REPORT

| | International application No. |
|---|---|
| | **PCT/KR2023/010177** |

**A.    CLASSIFICATION OF SUBJECT MATTER**

**G06F 16/27**(2019.01)i; **G06F 16/23**(2019.01)i; **G06F 16/182**(2019.01)i

According to International Patent Classification (IPC) or to both national classification and IPC

**B.    FIELDS SEARCHED**

Minimum documentation searched (classification system followed by classification symbols)

G06F 16/27(2019.01); G06F 11/07(2006.01); G06F 11/28(2006.01); G06F 15/16(2006.01); G06F 16/00(2019.01); G06F 16/2452(2019.01); G06F 17/30(2006.01); G06F 9/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타임스탬프(timestamp), 원본 저장소(source storage), 복제본 저장소(replica storage), 리스트(list), 클라이언트(client)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2022-0077108 A (COUPANG CORP.) 08 June 2022 (2022-06-08)<br>See paragraphs [0005], [0040] and [0056]; and claims 1-3. | 1-15 |
| Y | KR 10-2017-0132866 A (ALIBABA GROUP HOLDING LIMITED) 04 December 2017 (2017-12-04)<br>See paragraphs [0033] and [0051]. | 1-15 |
| Y | KR 10-2016-0054298 A (LG CHEM, LTD.) 16 May 2016 (2016-05-16)<br>See paragraph [0010]. | 2-5,11-14 |
| Y | KR 10-1076688 B1 (DAEATI CO., LTD.) 26 October 2011 (2011-10-26)<br>See paragraph [0013]; and claim 1. | 6-9,15 |
| A | US 2013-0339297 A1 (ACTIFIO, INC.) 19 December 2013 (2013-12-19)<br>See paragraphs [0087]-[0447]; claims 8-11; and figures 2, 10, 15 and 18A-26. | 1-15 |

☐ Further documents are listed in the continuation of Box C.      ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 October 2023** | **06 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010177**

| Patent document cited in search report | | | Publication date (day/month/year) | Patent family member(s) | | | Publication date (day/month/year) |
|---|---|---|---|---|---|---|---|
| KR | 10-2022-0077108 | A | 08 June 2022 | KR | 10-2023-0100714 | A | 05 July 2023 |
| | | | | US | 11016969 | B1 | 25 May 2021 |
| | | | | US | 11709830 | B2 | 25 July 2023 |
| | | | | US | 2022-0164351 | A1 | 26 May 2022 |
| | | | | WO | 2022-112838 | A1 | 02 June 2022 |
| KR | 10-2017-0132866 | A | 04 December 2017 | CN | 106156094 | A | 23 November 2016 |
| | | | | CN | 106156094 | B | 17 September 2019 |
| | | | | EP | 3282369 | A1 | 14 February 2018 |
| | | | | EP | 3839762 | A1 | 23 June 2021 |
| | | | | JP | 2018-510430 | A | 12 April 2018 |
| | | | | JP | 2021-068470 | A | 30 April 2021 |
| | | | | JP | 7098007 | B2 | 08 July 2022 |
| | | | | US | 10877990 | B2 | 29 December 2020 |
| | | | | US | 2018-0018381 | A1 | 18 January 2018 |
| | | | | WO | 2016-155492 | A1 | 06 October 2016 |
| KR | 10-2016-0054298 | A | 16 May 2016 | None | | | |
| KR | 10-1076688 | B1 | 26 October 2011 | None | | | |
| US | 2013-0339297 | A1 | 19 December 2013 | CA | 2877284 | A1 | 27 December 2013 |
| | | | | CN | 104769555 | A | 08 July 2015 |
| | | | | EP | 2862051 | A2 | 22 April 2015 |
| | | | | JP | 2015-525419 | A | 03 September 2015 |
| | | | | KR | 10-2015-0021117 | A | 27 February 2015 |
| | | | | US | 2013-0339302 | A1 | 19 December 2013 |
| | | | | US | 2013-0339303 | A1 | 19 December 2013 |
| | | | | US | 2013-0339319 | A1 | 19 December 2013 |
| | | | | US | 2013-0339471 | A1 | 19 December 2013 |
| | | | | US | 2013-0339643 | A1 | 19 December 2013 |
| | | | | US | 9384254 | B2 | 05 July 2016 |
| | | | | US | 9495435 | B2 | 15 November 2016 |
| | | | | US | 9501545 | B2 | 22 November 2016 |
| | | | | US | 9501546 | B2 | 22 November 2016 |
| | | | | US | 9659077 | B2 | 23 May 2017 |
| | | | | US | 9754005 | B2 | 05 September 2017 |
| | | | | WO | 2013-192198 | A2 | 27 December 2013 |
| | | | | WO | 2013-192198 | A3 | 02 April 2015 |

Form PCT/ISA/210 (patent family annex) (July 2022)